# EUROPEAN PATENT APPLICATION

(11) **EP 4 624 850 A1**
(43) Date of publication of application: **01.10.2025**
(21) Application number: 25164131.2
(22) Date of filing: 17.03.2025
(51) Int. Cl.: F28D 1/03, F28F 3/14, H01M 10/613, H01M 10/625, H01M 10/647, H01M 10/6567, H01M 50/211

(54) **HEAT EXCHANGER AND BATTERY PACK**

(30) Priority: 25.03.2024 JP 2024047974
(71) Applicant: ZACROS Corporation, Tokyo 112-0002 (JP); Nifco Inc., Yokosuka-shi Kanagawa 239-8560 (JP)
(72) Inventor: OKUMA, Ryoya, Kanagawa, 239-8560 (JP); OKABAYASHI, Shunsuke, Kanagawa, 239-8560 (JP); ICHIMARU, Naohiro, Tokyo, 112-0002 (JP); MORINO, Atsushi, Tokyo, 112-0002 (JP)
(74) Representative: Richardt Patentanwälte PartG mbB

(57) **Abstract**

A heat exchanger includes a bag body including, in an interior of the bag body, a heat exchange path through which a heat exchange medium flows; and a base body including, in an interior of the base body, a supply path that communicates with one end of the heat exchange path and is configured to supply the heat exchange medium to the heat exchange path, and a recovery path that communicates with another end of the heat exchange path and is configured to recover the heat exchange medium. The bag body includes a front sheet, a rear sheet opposite to the front sheet, an inflow port through which the heat exchange medium flows in, an outflow port through which the heat exchange medium flows out, and an occlusion prevention member provided over a surface of the front sheet.

## Description

### BACKGROUND

### 1. Field of the Invention

The present disclosure relates to a heat exchanger and a battery pack.

### 2. Description of the Related Art

Heat exchangers configured to remove heat generated when using batteries mounted on electric vehicles and the like are known.

For example, Japanese Patent Laid-Open Publication No. 2018-163741 discloses a battery cooling device including a cooler disposed between the bottom surface of a battery module and the top surface of a bottom plate of a battery casing; partition walls formed in the cooler and connecting the upper wall and the lower wall of the cooler; and a plurality of baffle tubes through which cooling liquid flows and that are formed in the cooler so as to be aligned side by side in the horizontal direction by being partitioned by the partition walls.

However, in the above-described heat exchangers of the related art, the cooling site is the bottom surface of the battery. Thus, generation of heat from the side surfaces of the battery cannot be suppressed, and cooling performance cannot be sufficiently achieved.

In view of the above, the present disclosure provides a heat exchanger that suppresses occlusion of a heat exchange path through which a heat exchange medium flows, and thus can enhance cooling performance.

### SUMMARY

A heat exchanger according to an aspect of the present disclosure includes: a bag body including, in an interior of the bag body, a heat exchange path through which a heat exchange medium flows; and a base body including, in an interior of the base body, a supply path that communicates with one end of the heat exchange path and is configured to supply the heat exchange medium to the heat exchange path, and a recovery path that communicates with another end of the heat exchange path and is configured to recover the heat exchange medium. The bag body includes a front sheet, a rear sheet opposite to the front sheet, an inflow port through which the heat exchange medium flows in, an outflow port through which the heat exchange medium flows out, and an occlusion prevention member provided over a surface of the front sheet.

According to the heat exchanger according to the embodiment of the present disclosure, occlusion of the heat exchange path through which the heat exchange medium flows can be suppressed, and cooling performance can be enhanced.

### BRIEF DESCRIPTION OF THE DRAWINGS

FIG. 1 is a perspective view of a heat exchanger according to an embodiment as viewed in one direction;
FIG. 2 is an exploded perspective view of the heat exchanger according to the embodiment as viewed in one direction;
FIG. 3 is a perspective view of the heat exchanger according to the embodiment as viewed in another direction;
FIG. 4 is a perspective view of a bag body according to an embodiment;
FIG. 5 is a view of the bag body taken along the cross section I-I in FIG. 4;
FIG. 6 is a schematic view of a cross section of a front sheet of the bag body according to the embodiment;
FIG. 7 is a view of the bag body taken along the cross section II-II in FIG. 4;
FIG. 8 is a view of another bag body taken along the cross section II-II in FIG. 4;
FIG. 9 is an explanatory view illustrating the flow of a heat exchange medium in the heat exchanger according to the embodiment;
FIG. 10 is a schematic cross-sectional view illustrating a production method of the heat exchanger according to the embodiment; and
FIG. 11 is a perspective view of a battery pack according to an embodiment as viewed in one direction.

### DETAILED DESCRIPTION OF THE DISCLOSURE

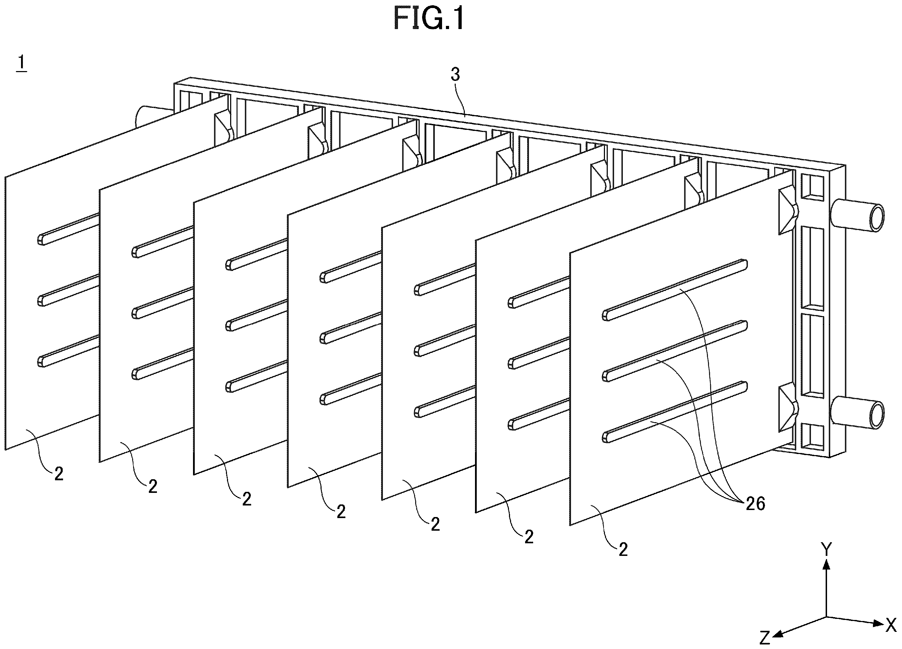

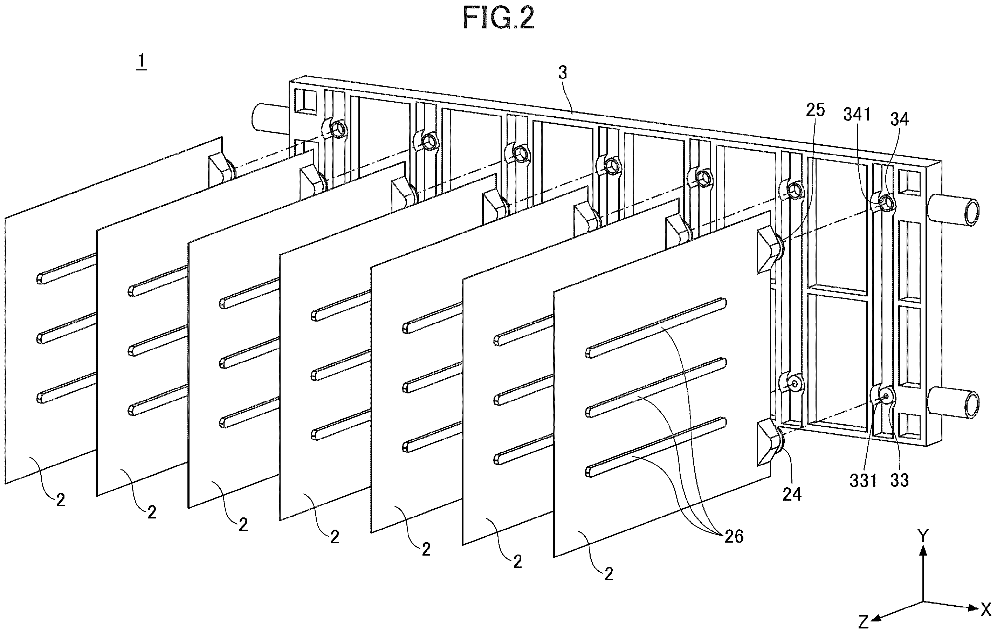

Hereinafter, embodiments of the present disclosure will be described with reference to the drawings. For ease of understanding of the description, the same components in the drawings are denoted by the same reference symbols, and redundant description thereof may be omitted. In the present specification, a three-dimensional orthogonal coordinate system having three axis directions (X direction, Y direction, and Z direction) is used. Specifically, in a plane parallel to a front surface F1 of a base body 3, one of the two directions orthogonal to each other is defined as the X direction and the other is defined as the Y direction, and the direction perpendicular to the front surface F1 of the base body 3 is defined as the Z direction. The posture of a heat exchanger 1 in use is not limited to the example illustrated in FIGS. 1 and 2.

### <Heat Exchanger>

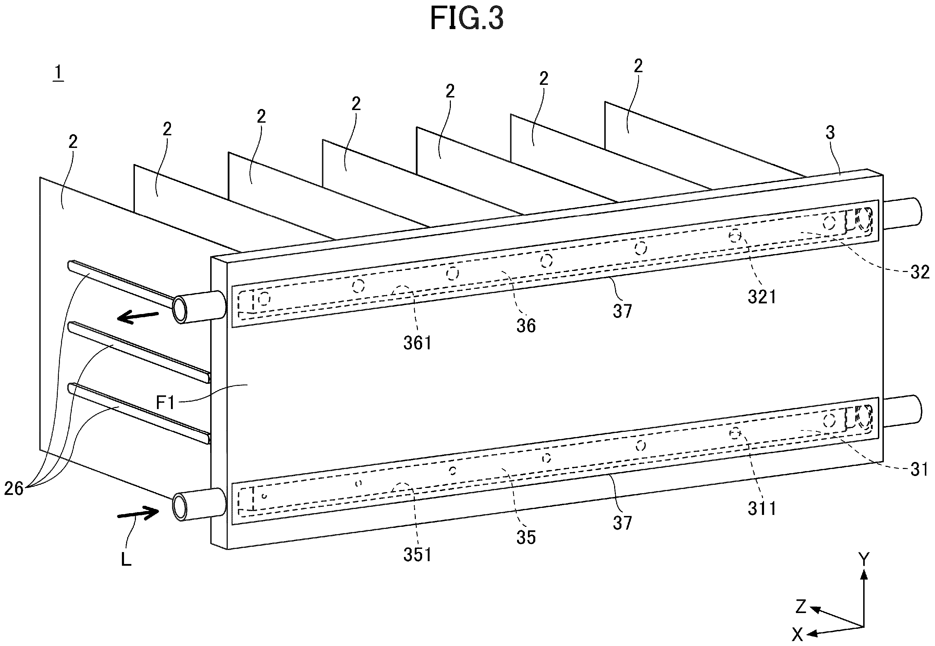

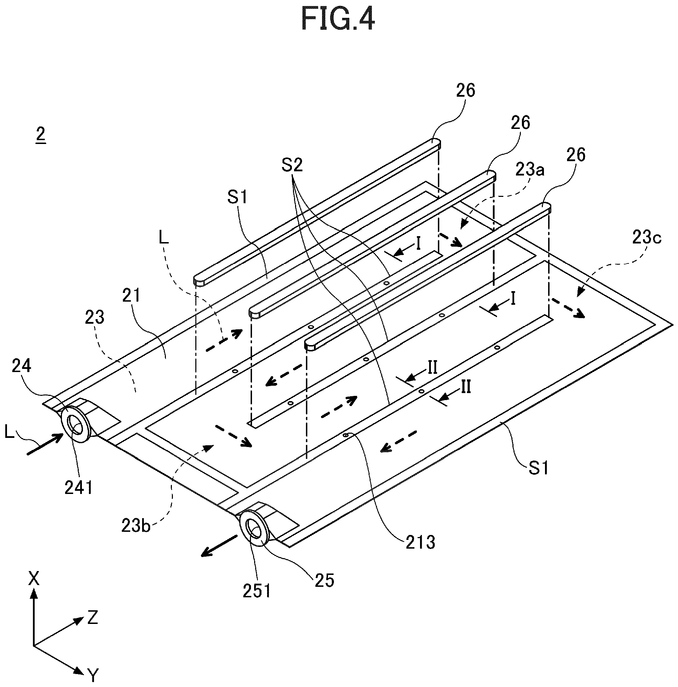

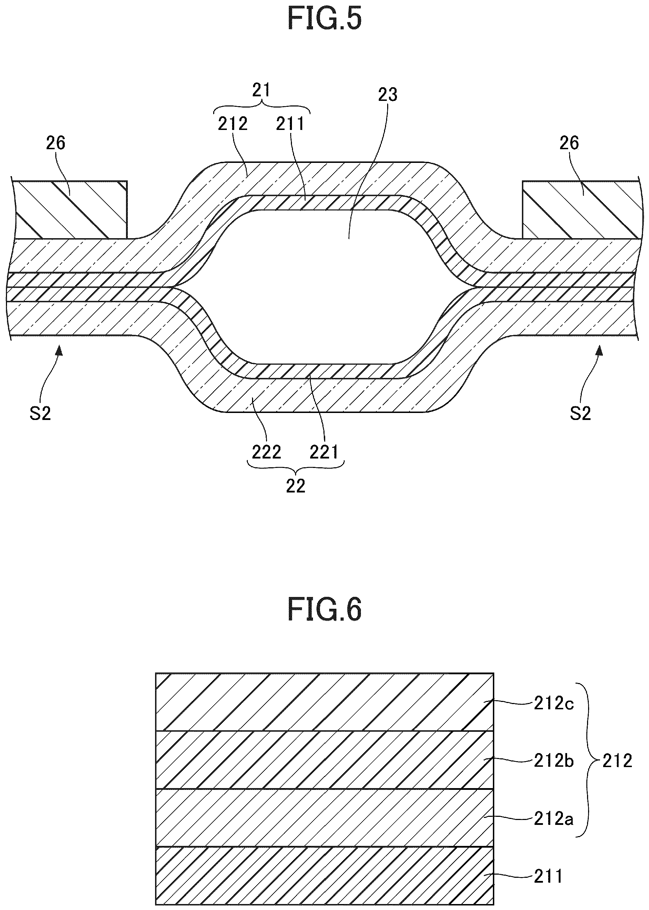

FIG. 1 is a perspective view of a heat exchanger according to an embodiment as viewed in one direction. FIG. 2 is an exploded perspective view of the heat exchanger according to the embodiment as viewed in one direction. FIG. 3 is a perspective view of the heat exchanger according to the embodiment as viewed in another direction. FIG. 4 is a perspective view of a bag body according to an embodiment. FIG. 5 is a view of the bag body taken along the cross section I-I in FIG. 4. In FIG. 4, the solid arrows and the dashed arrows indicate the flow of the heat exchange medium. FIG. 5 is a cross section of a state in which occlusion prevention members are attached to the front sheet in FIG. 4.

As illustrated in FIGS. 1 to 4, the heat exchanger 1 includes a bag body 2 and the base body 3, and the bag body 2 includes, in the interior of the bag body 2, a heat exchange path 23 through which a heat exchange medium L flows. The base body 3 includes, in an interior of the base body 3, a supply path 31 and a recovery path 32. The supply path 31 communicates with one end of the heat exchange path 23 and is configured to supply the heat exchange medium L to the heat exchange path 23. The recovery path 32 communicates with the other end of the heat exchange path 23 and is configured to recover the heat exchange medium L. In the example illustrated in FIGS. 1 to 3, a plurality of bag bodies 2 are attached to the base body 3 side by side apart from each other. In this case, by disposing a cooling target, such as a battery or the like, between the adjacent bag bodies 2, the cooling target can be cooled. The present embodiment is described using an example in which the heat exchanger 1 includes a plurality of bag bodies 2. However, this is by no means a limitation. The heat exchanger 1 may include a single bag body 2.

The bag body 2 includes an inflow port 241 through which the heat exchange medium L flows in, and an outflow port 251 through which the heat exchange medium L flows out. The shape of the bag body 2 may be, for example, a rectangular shape in a plan view.

As illustrated in FIG. 5, the bag body 2 may include a front sheet 21 and a rear sheet 22 opposite to the front sheet 21. The bag body 2 may be formed by folding a single sheet or by pasting a plurality of sheets together. That is, the front sheet 21 and the rear sheet 22 may be formed from a single sheet or may be formed from different sheets.

The front sheet 21 may be formed of a layered film including a first sealant layer 211 on an innermost side of the front sheet 21. The rear sheet 22 may be formed of a layered film including a second sealant layer 221 on an innermost side of the rear sheet 22.

Specifically, the front sheet 21 may be formed of a layered film in which the first sealant layer 211 and a base layer 212 are stacked. In terms of thermal fusion properties, a material forming the first sealant layer 211 is preferably a material that is of the same type as the material forming a first opening member 24 and a second opening member 25, which will be described below.

Examples of the material forming the first sealant layer 211 include polyethylene, polypropylene, and the like. The material forming the first sealant layer 211 is preferably polypropylene. When the material forming the first sealant layer 211 is polypropylene, a seal portion (thermally fused portion) of the bag body 2 can have high adhesion strength in a high-temperature environment. Also, the bag body 2 can have appropriate rigidity. As the polypropylene, it is suitable to use unstretched polypropylene (CPP).

The material forming the first sealant layer 211 preferably contains block polypropylene. Thus, penetration of the heat exchange medium L from the first sealant layer 211 into the base layer 212 can be suppressed.

The first sealant layer 211 may be formed of a single layer or a plurality of layers. When the first sealant layer 211 is formed of a plurality of layers, the first sealant layer 211 preferably has a three-layer structure in which a layer formed of block polypropylene is sandwiched between two layers formed of random polypropylene. The layer formed of block polypropylene has the function of suppressing the penetration of the heat exchange medium L into other adjacent layers, and the layers formed of random polypropylene have the function of firmly adhering to other layers. Therefore, with the above-described three-layer structure, the bag body 2 can be enhanced in durability.

The base layer 212 may be formed of a single layer or a plurality of layers. FIG. 6 is a schematic view of a cross section of the front sheet of the bag body according to the embodiment. For example, as illustrated in FIG. 6, the base layer 212 may be formed of a plurality of layers, i.e., a stacked layer in which a metal layer 212a, a resin layer 212b, and a resin layer 212c are stacked in this order over the first sealant layer 211.

The metal layer 212a may be, for example, a metal foil or a film on which a metal is vapor deposited. Examples of the material forming the metal layer 212a include aluminum, copper, stainless steel, titanium, and the like. Of these, the material forming the metal layer 212a preferably contains aluminum. By this, the heat exchanger 1 can further increase cooling efficiency, and can be reduced in weight.

The thickness of the metal layer 212a is preferably 7 micrometers (µm) or more, and more preferably 30 µm or more. When the thickness of the metal layer 212a is 7 µm or more, the heat exchanger 1 can further increase cooling efficiency, and provide good handling performance. The thickness of the metal layer 212a is preferably 60 µm or less, and more preferably 50 µm or less. When the thickness of the metal layer 212a is 60 µm or less, the bag body 2 can have flexibility high enough to closely adhere to a heat exchange target.

In the example illustrated in FIG. 6, although two resin layers are provided, a single resin layer may be provided or three or more resin layers may be provided. When two resin layers, i.e., the resin layers 212b and 212c, are provided, for example, a material forming the inner resin layer 212b may be polyamide, and a material forming the outer resin layer 212c may be polyethylene terephthalate. When the material forming the resin layer 212b is polyamide, the bag body 2 can be enhanced in pressure resistance when the heat exchange medium L flows through the heat exchange path 23. This can suppress formation of pinholes. When the material forming the resin layer 212c is polyethylene terephthalate, the bag body 2 can be enhanced in scratch resistance. Examples of the materials forming the resin layers 212b and 212c include polyamide, polyethylene terephthalate, polyester, and the like.

The layers forming the front sheet 21 may be bonded together via an adhesive layer or an anchoring agent layer, or may be directly bonded together. The front sheet 21 may include layers other than the metal layer 212a and the resin layers 212b and 212c, on the same side of the first sealant layer 211 as the base layer 212.

The structure of the rear sheet 22 is the same as that of the above-described front sheet 21, and thus description thereof is omitted. Also, the structure of the second sealant layer 221 is the same as that of the above-described first sealant layer 211, and thus description thereof is omitted.

The thicknesses of the front sheet 21 and the thickness of the rear sheet 22 are each preferably 150 µm or more and 350 µm or less, and more preferably 200 µm or more and 300 µm or less.

As illustrated in FIGS. 4 and 5, the bag body 2 may include: peripheral seal portions S1 in which the first sealant layer 211 and the second sealant layer 221 are bonded together at the peripheral portion; and inner seal portions S2 in which the first sealant layer 211 and the second sealant layer 221 are bonded together, the inner seal portions S2 extending inward from the peripheral seal portions S1. The peripheral seal portions S1 and the inner seal portions S2 are, for example, seal portions in which the first sealant layer 211 and the second sealant layer 221 are thermally fused together. The bag body 2 may be a pouch.

The heat exchange path 23 is formed by the peripheral seal portions S1, the inner seal portions S2, and the inner surface of the bag body 2. In the example illustrated in FIG. 4, the heat exchange path 23 has, in a plan view, a wave shape including three turning portions 23a, 23b, and 23c. The shape of the heat exchange path 23 in a plan view may be a rectangular wave shape, a sinusoidal wave shape, a triangular wave shape, or the like. That is, the shape of the heat exchange path 23 in a plan view may be a shape in which U shapes or V shapes are repeated. When the heat exchange path 23 has a wave shape in a plan view, the number of turning portions may be an odd number.

The bag body 2 includes occlusion prevention members 26 that are provided over the surface of the front sheet 21. When the heat exchange target is a battery, the occlusion prevention members 26 each have the function of substantially preventing the heat exchange path 23 from having a thickness equal to or less than the thickness of the occlusion prevention member 26 occurring even if the battery expands and presses the bag body 2, thereby suppressing occlusion of the heat exchange path 23. The occlusion prevention member 26 may be, for example, a plate or a projection. In the examples illustrated in FIGS. 1 to 4, the occlusion prevention member 26 is an elongated plate.

With respect to the surface of the front sheet 21 in the inner seal portions S2, the height of the occlusion prevention member 26 is lower than the height of the surface of the front sheet 21 forming the heat exchange path 23. Here, the term "height" means the maximum value of heights.

The occlusion prevention members 26 may be provided over at least a part of the surface of the front sheet 21 in the peripheral seal portions S1 and the inner seal portions S2. That is, the occlusion prevention members 26 may or may not overlap the heat exchange path 23 as viewed in a direction orthogonal to the front sheet 21 (X direction). When the occlusion prevention members 26 are provided at positions overlapping the heat exchange path 23 as viewed in the X direction, as the occlusion prevention members 26 contact and are pressed against a battery, i.e., the heat exchange target, the occlusion prevention members 26 press the heat exchange path 23 and occlude a part of the heat exchange path 23. However, the heat exchange medium L is considered to flow through the other part. By providing the occlusion prevention members 26 over at least a part of the surface of the front sheet 21 in the peripheral seal portions S1 and the inner seal portions S2, the heat exchange path 23 is not pressed by the occlusion prevention members 26, and the heat exchange path 23 can be prevented from narrowing in the Y-axis direction (the width of the heat exchange path 23 can be prevented from narrowing).

The occlusion prevention members 26 may be provided at positions overlapping a part of the heat exchange path 23 in the width direction in a plan view. That is, the occlusion prevention members 26 may be disposed in any manner unless each of the occlusion prevention members 26 is disposed over the entirety of the heat exchange path 23 in the width direction (from one end to the other end) in a plan view. By providing the occlusion prevention members 26 at positions overlapping a part of the heat exchange path 23 in the width direction in a plan view, even if the occlusion prevention members 26 contact and are pressed against a battery, i.e., the heat exchange target, and the occlusion prevention members 26 press the heat exchange path 23, it is possible to substantially prevent the heat exchange path 23 from being occluded completely in the width direction to result in occlusion of the flow of the heat exchange medium L.

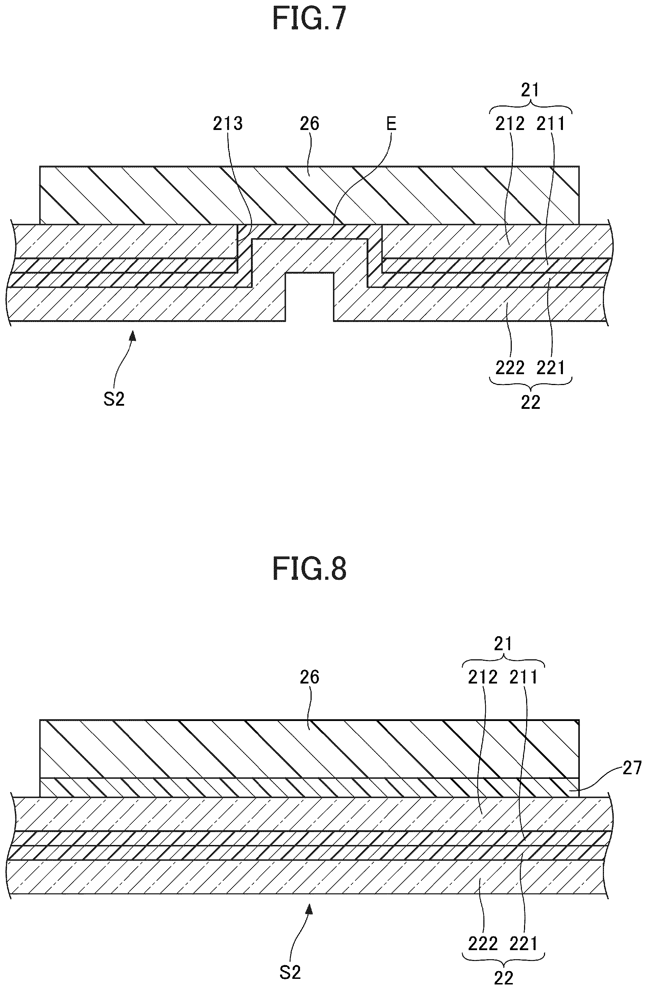

FIG. 7 is a view of the bag body taken along the cross section II-II in FIG. 4. FIG. 7 illustrates a cross section in a state in which the occlusion prevention members 26 are attached to the front sheet 21 in FIG. 4. As illustrated in FIGS. 4 and 7, the front sheet 21 may have through holes 213, in the inner seal portions S2. The second sealant layer 221 includes an exposed portion E exposed from the through hole 213, and the occlusion prevention member 26 is thermally fused to the exposed portion E.

The through holes 213 may be formed in the front sheet 21 in the peripheral seal portions S1 or the inner seal portions S2, or may be formed in the front sheet 21 in both the peripheral seal portions S1 and the inner seal portions S2. In the example illustrated in FIG. 4, a plurality of through holes 213 are formed in the front sheet 21 in the inner seal portions S2 so as to be along a direction in which the inner seal portions S2 extend and so as to be apart from each other.

Examples of the material forming the occlusion prevention members 26 include polyethylene, polypropylene, and the like. The occlusion prevention members 26 and the second sealant layer 221 preferably contain resins of the same type. For example, the material forming the occlusion prevention members 26 includes polypropylene, and the material forming the second sealant layer 221 includes unstretched polypropylene.

FIG. 8 is a view of another bag body taken along the cross section II-II in FIG. 4. As illustrated in FIG. 8, the occlusion prevention member 26 may be fixed to the surface of the front sheet 21 via an adhesive layer 27. In this case, the front sheet 21 in the peripheral seal portions S1 and the inner seal portions S2 does not necessarily need to have the through holes 213. Instead of the adhesive layer 27, double-sided tape or the like may be used.

As illustrated in FIG. 8, when the occlusion prevention members 26 are fixed to the front sheet 21 with an adhesive, double-sided tape, or the like, the occlusion prevention members 26 do not need to be thermally fused to the second sealant layer 221. Therefore, as the material forming the occlusion prevention members 26, it is possible to use a material that cannot be thermally fused to the second sealant layer 221, such as a metal, a resin having a relatively high melting point, or the like. This can suppress thermal deformation of the occlusion prevention members 26 during driving of a battery.

The bag body 2 may include the first opening member 24 having the inflow port 241, and the second opening member 25 having the outflow port 251. Each of the first opening member 24 and the second opening member 25 is provided between the front sheet 21 and the rear sheet 22, and thermally fused to the first sealant layer 211 and the second sealant layer 221.

As the material forming the first opening member 24 and the second opening member 25, any material can be used as long as sealing properties can be ensured when they are bonded to the first sealant layer 211 and the second sealant layer 221. A material that can be thermally fused to the first sealant layer 211 and the second sealant layer 221 is preferable. In terms of thermal fusion properties, a material forming the first opening member 24 and the second opening member 25 is preferably a material that is of the same type as the material forming the first sealant layer 211 and the second sealant layer 221.

Each of the first opening member 24 and the second opening member 25 may be a cylindrical member, and have a flange extending outward from one end. The first opening member 24 and the second opening member 25 may each be a spout. When each of the first opening member 24 and the second opening member 25 is a spout having a flange, the contact area of each of the first opening member 24 and the second opening member 25 with the first sealant layer 211 and the second sealant layer 221 is increased, and thus the adhesion strength can be enhanced.

When the shape of the bag body 2 is rectangular in a plan view, the first opening member 24 and the second opening member 25 are provided at one side of the bag body 2. With this configuration, the supply path 31 and the recovery path 32 can be disposed to face this side of the bag body 2, and thus the heat exchanger 1 can be reduced in size. In the example illustrated in FIGS. 1 to 4, the shape of the bag body 2 is rectangular in a plan view, and the first opening member 24 and the second opening member 25 are provided at a short side of the bag body 2.

The base body 3 may be a plate. As illustrated in FIG. 2, the base body 3 includes: a first boss 33 having an outflow hole 331 that communicates with the supply path 31 and through which the heat exchange medium L flows out; and a second boss 34 having an inflow hole 341 that communicates with the recovery path 32 and through which the heat exchange medium L flows in. The first boss 33 is fitted to the inflow port 241, and the second boss 34 is fitted to the outflow port 251. When the first boss 33 is fitted to the inflow port 241, and the second boss 34 is fitted to the outflow port 251, the outflow hole 331 of the first boss 33 communicates with the inflow port 241 of the bag body 2, and the inflow hole 341 of the second boss 34 communicates with the outflow port 251 of the bag body 2. The outflow hole 331 and the inflow port 241 are coaxially disposed, and the inflow hole 341 and the outflow port 251 are coaxially disposed.

The base body 3 may include a plurality of first bosses 33 and a plurality of second bosses 34. When the base body 3 includes a plurality of first bosses 33 and a plurality of second bosses 34, a plurality of pairs of first bosses 33 and second bosses 34 are provided apart from each other at the rear surface of the base body 3 (the surface on the side on which the bag bodies 2 are arranged).

The first boss 33 and the inflow port 241 are fitted to each other liquid-tightly. Similarly, the second boss 34 and the outflow port 251 are fitted to each other liquid-tightly. The first boss 33 and the inflow port 241 may be fitted to each other via an O-ring, through thermal fusion, or with an adhesive. Similarly, the second boss 34 and the outflow port 251 may be fitted to each other via an O-ring, through thermal fusion, or with an adhesive. Examples of the adhesive include, for example, an adhesive containing modified silicone.

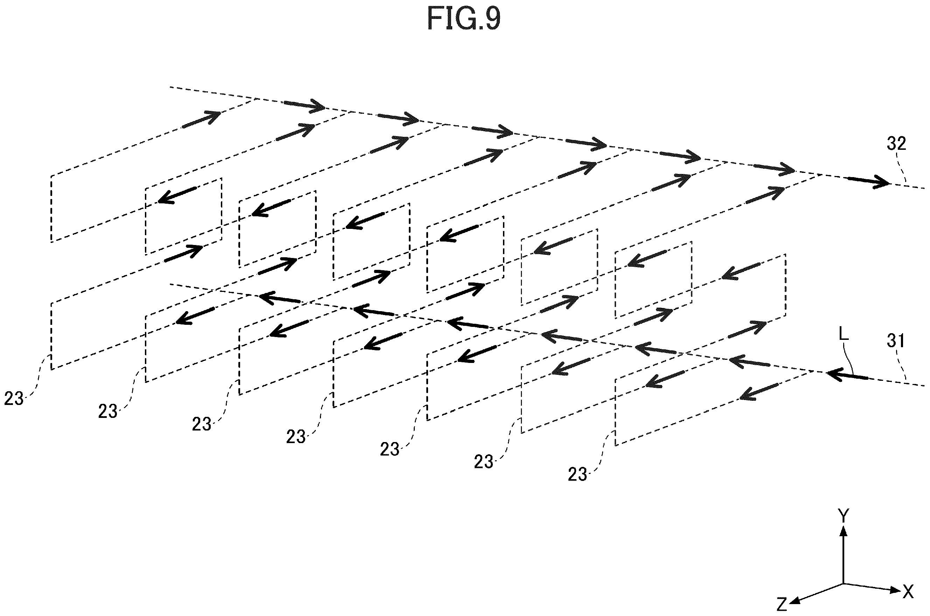

FIG. 9 is an explanatory view illustrating the flow of the heat exchange medium in the heat exchanger according to the embodiment. In FIG. 9, the supply path 31, the recovery path 32, and the heat exchange path 23 are shown by dashed lines, and the other structures are omitted. Also, in FIG. 9, arrows indicate the flow of the heat exchange medium L. As illustrated in FIG. 9, the heat exchange medium L, flowing through the supply path 31 in the interior of the base body 3, flows through the outflow hole 331 into one end (upstream end) of the heat exchange path 23, in the interior of the bag body 2, from the inflow port 241 of the bag body 2. When the heat exchange medium L reaches the other end of the heat exchange path 23, the heat exchange medium L flows into the recovery path 32, in the interior of the base body 3, from the inflow hole 341 through the outflow port 251 of the bag body 2.

The heat exchange medium L exchanges heat with the heat exchange target while flowing through the heat exchange path 23, and circulates as illustrated in FIG. 9. Thus, the heat exchanger 1 can maintain cooling performance. When the heat exchanger 1 includes a plurality of bag bodies 2, the heat exchange medium L flowing through the supply path 31 in the interior of the base body 3 is split into the inflow ports 241 of the bag bodies 2. The heat exchange medium L flowing out from the outflow ports 251 of the bag bodies 2 is merged into the recovery path 32 in the interior of the base body 3. The heat exchange medium L merged into the recovery path 32 is transferred to a radiator or the like, followed by cooling, and is returned to the supply path 31 again. In the example illustrated in FIG. 9, the heat exchange medium L flowing through the supply path 31 is split in a direction perpendicular to the supply path 31, and the heat exchange medium L flowing out from the outflow ports 251 of the bag bodies 2 is merged in a direction perpendicular to the recovery path 32.

The base body 3 has a first groove 35 and a second groove 36 in the front surface F1 (the surface opposite to the surface on the side on which the bag bodies 2 are arranged). The first groove 35 and the second groove 36 are exposed and extend in a first direction (X direction). The first groove 35 and the second groove 36 are in parallel. That is, the front surface F1 of the base body 3 has two openings 351 and 361. The base body 3 includes a sealing member 37 configured to seal the opening 351 of the first groove 35 and the opening 361 of the second groove 36. The base body 3 may include two sealing members 37, and one of the openings may be sealed with one of the sealing members 37 and the other may be sealed with the other sealing member 37. Alternatively, the base body 3 may include a single sealing member 37, and the two openings 351 and 361 may be sealed with the single sealing member 37.

The sealing member 37 may be a film or a sheet. The thickness of the sealing member 37 may be, for example, 10 µm or more and 100 µm or less. The sealing member 37 may include a thermal fusion resin layer at one surface. When the sealing member 37 includes a thermal fusion resin layer at one surface, the thermal fusion resin layer may be thermally fused to the front surface F1 of the base body 3. Examples of the material forming the thermal fusion resin layer include polyethylene, polypropylene, and the like. The thermal fusion resin layer may be formed of a single layer or a plurality of layers.

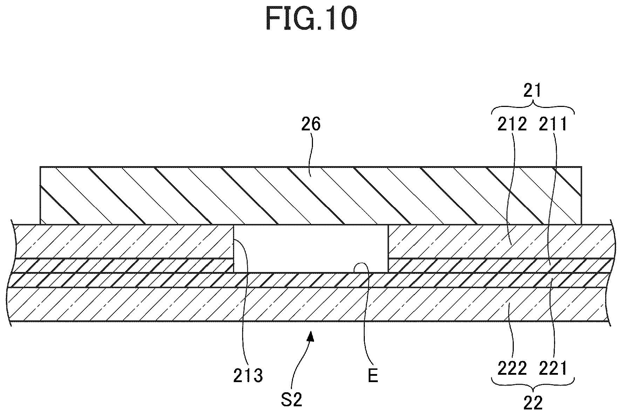

FIG. 10 is a schematic cross-sectional view illustrating a production method of the heat exchanger according to the embodiment. FIG. 10 illustrates a cross section at a position the same as that of the cross section illustrated in FIG. 7 (the cross section II-II in FIG. 4). An example of the production method of the heat exchanger according to the embodiment includes: a step of providing the bag body 2 including, in the interior of the bag body 2, the heat exchange path 23 through which the heat exchange medium L flows; a step of providing the base body 3 including, in the interior of the base body 3, the supply path 31 configured to supply the heat exchange medium L to the heat exchange path 23, and the recovery path 32 configured to recover the heat exchange medium L; and a step of attaching the bag body 2 to the base body 3 such that one end of the heat exchange path 23 communicates with the supply path 31 and the other end of the heat exchange path 23 communicates with the recovery path 32.

Further, the step of providing the bag body 2 includes a step of forming the plurality of through holes 213 in a region, where the seal portion is to be formed, of the front sheet 21 including the first sealant layer 211 at one surface; a step of laying the front sheet 21, in which the plurality of through holes 213 are formed, over the rear sheet 22 including the second sealant layer 221 on one surface such that the first sealant layer 211 faces the second sealant layer 221, as illustrated in FIG. 10, and further placing the occlusion prevention member 26 over the region, where the seal portion is to be formed, of the front sheet 21; and a step of thermally fusing the second sealant layer 221, exposed from the through holes 213, to the occlusion prevention member 26, and thermally fusing the first sealant layer 211 and the second sealant layer 221 facing each other in the region where the seal portion is to be formed, as illustrated in FIG. 7. Thus, the thermal fusion between the second sealant layer 221 and the occlusion prevention member 26, and the thermal fusion between the first sealant layer 211 and the second sealant layer 221 facing each other can be performed at the same time. This can simplify the production process, and readily produce the heat exchanger 1.

In the step of forming the plurality of through holes 213, the through holes 213 can be formed through punching or the like.

### <Battery Pack>

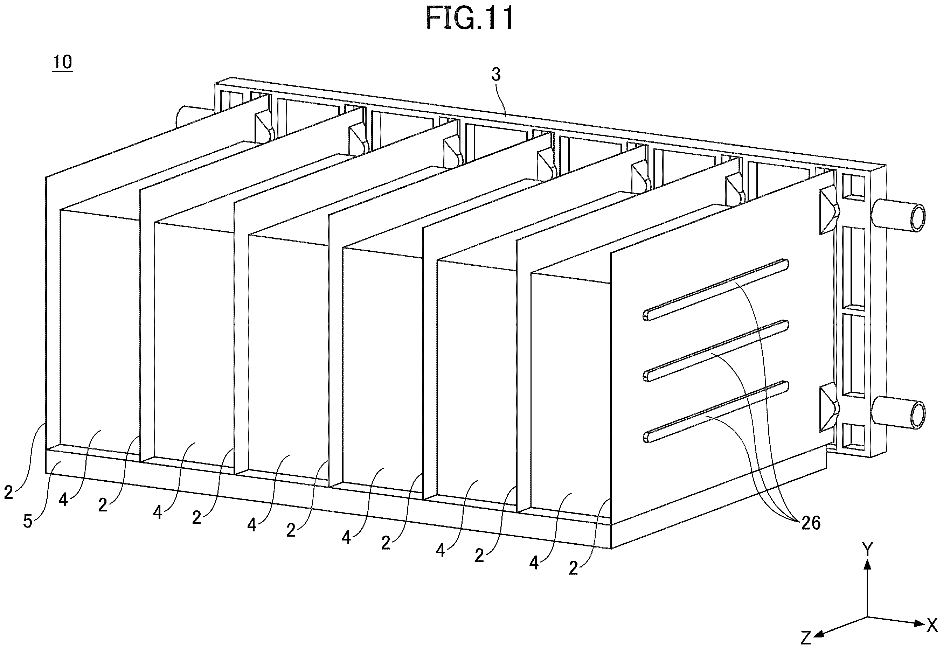

FIG. 11 is a perspective view of a battery pack according to an embodiment as viewed in one direction. As illustrated in FIG. 11, a battery pack 10 of the present embodiment includes the heat exchanger 1 of the present embodiment and a plurality of battery cells 4. One of the plurality of battery cells 4 is disposed between each pair of adjacent bag bodies 2 of the plurality of bag bodies 2. Each of the plurality of battery cells 4 is preferably disposed in contact with the adjacent bag bodies 2. In the example illustrated in FIG. 11, as viewed in the X direction, the outer dimension of the battery cell 4 is smaller than the outer dimension of the bag body 2. However, the outer dimension of the battery cell 4 may be larger than the outer dimension of the bag body 2, or may be the same as the outer dimension of the bag body 2.

The battery pack 10 may include a support 5 configured to support the plurality of battery cells 4. The battery pack 10 may further include a cover (not illustrated) configured to cover the heat exchanger 1 and the plurality of battery cells 4.

As described above, the heat exchanger 1 of the present embodiment includes the bag body 2 and the base body 3, which includes the supply path 31 and the recovery path 32, and the bag body 2 includes the front sheet 21, the rear sheet 22, the inflow port 241, the outflow port 251, and the occlusion prevention members 26. With this configuration, the heat exchanger 1 can dispose the bag bodies 2 to face both side surfaces of the heat exchange target, and thus cool the heat exchange target from both side surfaces. Also, when the heat exchange target is a battery, even if the battery expands due to charging and discharging, degradation over time, an increase in internal pressure, and the like, the bag bodies 2 can follow deformation of the battery and maintain contact with the battery. Moreover, even if the expansion of the battery progresses, the occlusion prevention members 26 contact the battery, thereby substantially preventing the bag bodies 2 from coming close to the battery beyond a certain distance. This can suppress occlusion of the heat exchange path 23. Thus, according to the heat exchanger 1, cooling performance can be enhanced.

In the present embodiment, the front sheet 21 of the bag body 2 is formed of a layered film including the first sealant layer 211 on the innermost side, and the rear sheet 22 of the bag body 2 is formed of a layered film including the second sealant layer 221 on the innermost side. The bag body 2 includes the peripheral seal portions S1 and the inner seal portions S2. The heat exchange path 23 is formed by the peripheral seal portions S1, the inner seal portions S2, and the inner surface of the bag body 2. With this configuration, the width of the inner seal portions S2 can be relatively reduced, and thus the area ratio of the heat exchange path 23 to the bag body 2 can be increased. Therefore, the heat exchanger 1 can relatively increase the contact area between the heat exchange medium L and the heat exchange target, and thus cooling performance can be further enhanced.

In the present embodiment, the occlusion prevention members 26 are provided over at least a part of the surface of the front sheet 21 in the inner seal portions S2. With this configuration, when the heat exchange target is a battery, even if the battery expands and presses the occlusion prevention members 26, the heat exchange path 23 in the bag body 2 is not pressed by the presence of the occlusion prevention members 26, and thus occlusion of the heat exchange path 23 can be further suppressed. Therefore, according to the heat exchanger 1, cooling performance can be further enhanced.

In the present embodiment, the front sheet 21 in the peripheral seal portions S1 and the inner seal portions S2 has the through holes 213, the second sealant layer 221 includes the exposed portion E exposed from the through holes 213, and the occlusion prevention members 26 are thermally fused to the exposed portion E. With this configuration, the occlusion prevention members 26 are thermally fused to the second sealant layer 221 through the through holes 213, and thus are bonded to the second sealant layer 221 with sufficiently high adhesion strength. Therefore, removal of the occlusion prevention members 26 from the front sheet 21 can be suppressed, and thus occlusion of the heat exchange path 23 can be further suppressed.

In the present embodiment, the occlusion prevention members 26 and the second sealant layer 221 contain a resin of the same type. Thus, the adhesion strength due to thermal fusion between the occlusion prevention members 26 and the second sealant layer 221 can be increased. Therefore, removal of the occlusion prevention members 26 from the front sheet 21 can be further suppressed, and thus occlusion of the heat exchange path 23 can be further suppressed.

In the present embodiment, each of the front sheet 21 and the rear sheet 22 includes a metal layer. Therefore, according to the heat exchanger 1, heat exchange efficiency can be increased, and thus cooling performance can be further enhanced.

In the present embodiment, the plurality of bag bodies 2 are attached to the base body 3 side by side apart from each other. With this configuration, when the heat exchange target is a battery, one of the plurality of battery cells forming the battery can be disposed between each pair of the adjacent bag bodies 2 of the plurality of bag bodies 2, and thus each of the battery cells can be cooled from both side surfaces. Therefore, according to the heat exchanger 1, cooling performance can be further enhanced.

The battery pack 10 of the present embodiment includes the heat exchanger 1 and the plurality of battery cells 4, and one of the plurality of battery cells 4 is disposed between each pair of the adjacent bag bodies 2 of the plurality of bag bodies 2. With this configuration, the heat exchanger 1 can cool each of the battery cells 4 from both side surfaces. Moreover, even if the battery cells 4 expand due to charging and discharging, degradation over time, an increase in internal pressure, and the like, the bag bodies 2 can follow deformation of the battery cells 4 and maintain contact with the battery cells 4. Therefore, according to the battery pack 10, occlusion of the heat exchange path 23 can be suppressed, and cooling performance can be enhanced.

### (Aspects of Present Disclosure)

The present disclosure includes the following aspects.

### <Aspect 1>

A heat exchanger, including:
a bag body including, in an interior of the bag body, a heat exchange path through which a heat exchange medium flows; and
a base body including, in an interior of the base body, a supply path that communicates with one end of the heat exchange path and is configured to supply the heat exchange medium to the heat exchange path, and a recovery path that communicates with another end of the heat exchange path and is configured to recover the heat exchange medium, in which
the bag body includes
   a front sheet,
   a rear sheet opposite to the front sheet,
   an inflow port through which the heat exchange medium flows in,
   an outflow port through which the heat exchange medium flows out, and
   an occlusion prevention member provided over a surface of the front sheet.

### <Aspect 2>

The heat exchanger according to Aspect 1, in which
the front sheet is formed of a layered film including a first sealant layer on an innermost side of the front sheet,
the rear sheet is formed of a layered film including a second sealant layer on an innermost side of the rear sheet,
the bag body includes:
   a peripheral seal portion in which the first sealant layer and the second sealant layer are bonded together at a peripheral portion of the bag body, and
   an inner seal portion in which the first sealant layer and the second sealant layer are bonded together, the inner seal portion extending inward from the peripheral seal portion, and
   the heat exchange path is formed by the peripheral seal portion, the inner seal portion, and an inner surface of the bag body.

### <Aspect 3>

The heat exchanger according to Aspect 2, in which
the occlusion prevention member is provided over at least a part of the surface of the front sheet in the peripheral seal portion and the inner seal portion.

### <Aspect 4>

The heat exchanger according to Aspect 2 or 3, in which
the front sheet includes a through hole, in the peripheral seal portion and the inner seal portion,
the second sealant layer includes an exposed portion that is exposed from the through hole, and
the occlusion prevention member is thermally fused to the exposed portion.

### <Aspect 5>

The heat exchanger according to any one of Aspects 2 to 4, in which
the occlusion prevention member and the second sealant layer contain a resin of a same type.

### <Aspect 6>

The heat exchanger according to any one of Aspects 1 to 5, in which
each of the front sheet and the rear sheet includes a metal layer.

### <Aspect 7>

The heat exchanger according to any one of Aspects 1 to 6, in which
a plurality of bag bodies, each being the bag body, are attached to the base body side by side apart from each other.

### <Aspect 8>

A battery pack, including:
the heat exchanger according to Aspect 7; and
a plurality of battery cells, in which
one of the plurality of battery cells is disposed between each pair of adjacent bag bodies of the plurality of bag bodies.

The heat exchanger 1 of the present embodiment includes a heat exchanger for cooling of a battery for a vehicle. Also, the heat exchanger 1 can be applied as a heat exchanger for cooling of an electric motor mounted on a vehicle, a heat exchanger for cooling of a power semiconductor element of a power-driven device, and the like. By using the heat exchange medium L for heating, the heat exchanger 1 can be applied as a heat exchanger for heating.

Although the embodiments have been described as described above, the above embodiments are presented as examples, and the present disclosure is not limited to the above embodiments. The above embodiments can be implemented in various other forms, and various combinations, omissions, substitutions, modifications, and the like can be made without departing from the intent of the present invention. These embodiments and modifications thereof are encompassed in the scope and intent of the present invention, and are also included in the scope of the present invention and equivalents of the claims as recited.

### REFERENCE SIGNS LIST

- 1: Heat exchanger
- 2: Bag body
- 21: Front sheet
- 211: First sealant layer
- 213: Through hole
- 22: Rear sheet
- 221: Second sealant layer
- 23: Heat exchange path
- 241: Inflow port
- 251: Outflow port
- 26: Occlusion prevention member
- 3: Base body
- 31: Supply path
- 32: Recovery path
- 4: Battery cell
- 10: Battery pack
- L: Heat exchange medium
- S1: Peripheral seal portion
- S2: Inner seal portion
- E: Exposed portion

## Claims

1. A heat exchanger, comprising:
a bag body including, in an interior of the bag body, a heat exchange path through which a heat exchange medium flows; and
a base body including, in an interior of the base body, a supply path that communicates with one end of the heat exchange path and is configured to supply the heat exchange medium to the heat exchange path, and a recovery path that communicates with another end of the heat exchange path and is configured to recover the heat exchange medium, wherein
the bag body includes
a front sheet,
a rear sheet opposite to the front sheet,
an inflow port through which the heat exchange medium flows in,
an outflow port through which the heat exchange medium flows out, and
an occlusion prevention member provided over a surface of the front sheet.

2. The heat exchanger according to claim 1, wherein
the front sheet is formed of a layered film including a first sealant layer on an innermost side of the front sheet,
the rear sheet is formed of a layered film including a second sealant layer on an innermost side of the rear sheet,
the bag body includes:
a peripheral seal portion in which the first sealant layer and the second sealant layer are bonded together at a peripheral portion of the bag body, and
an inner seal portion in which the first sealant layer and the second sealant layer are bonded together, the inner seal portion extending inward from the peripheral seal portion, and
the heat exchange path is formed by the peripheral seal portion, the inner seal portion, and an inner surface of the bag body.

3. The heat exchanger according to claim 2, wherein
the occlusion prevention member is provided over at least a part of the surface of the front sheet in the peripheral seal portion and the inner seal portion.

4. The heat exchanger according to claim 3, wherein
the front sheet includes a through hole, in the inner seal portion,
the second sealant layer includes an exposed portion that is exposed from the through hole, and
the occlusion prevention member is thermally fused to the exposed portion.

5. The heat exchanger according to claim 4, wherein
the occlusion prevention member and the second sealant layer contain a resin of a same type.

6. The heat exchanger according to claim 5, wherein
each of the front sheet and the rear sheet includes a metal layer.

7. The heat exchanger according to any one of claims 1 to 6, wherein
a plurality of bag bodies, each being the bag body, are attached to the base body side by side apart from each other.

8. A battery pack, comprising:
the heat exchanger according to claim 7; and
a plurality of battery cells, wherein
one of the plurality of battery cells is disposed between each pair of adjacent bag bodies of the plurality of bag bodies.
